(19) Europäisches Patentamt
European Patent Office
Office européen des brevets

(11) **EP 4 553 872 B1**

(12) **EUROPEAN PATENT SPECIFICATION**

(45) Date of publication and mention
of the grant of the patent:
**04.03.2026   Bulletin 2026/10**

(21) Application number: **23219081.9**

(22) Date of filing: **21.12.2023**

(51) International Patent Classification (IPC):
***H01G 11/26*** (2013.01)     ***H01G 11/52*** (2013.01)
***H01G 11/56*** (2013.01)

(52) Cooperative Patent Classification (CPC):
**H01G 11/56; H01G 11/26; H01G 11/52; Y02E 60/13**

(54) **HYDROGEL ELECTROLYTE COMPOSITION COMPRISING CELLULOSE AND CORK PARTICLES, METHOD OF MAKING SAME AND DEVICES USING SAME**

HYDROGEL-ELEKTROLYTZUSAMMENSETZUNG, DIE ZELLULOSE UND KORKPARTIKEL ENTHÄLT, VERFAHREN ZUR HERSTELLUNG UND VORRICHTUNGEN MIT DIESEM ELEKTROLYT

COMPOSITION D'ÉLECTROLYTE HYDROGEL COMPRENANT DE LA CELLULOSE ET DES PARTICULES DE LIÈGE, PROCÉDÉ DE FABRICATION ET DISPOSITIFS AVEC CET ÉLECTROLYTE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority:   **07.11.2023   PT 2023119026**

(43) Date of publication of application:
**14.05.2025   Bulletin 2025/20**

(73) Proprietors:
• **NOS Inovação, S.A.**
  **4460-191 Senhora da Hora (PT)**
• **Universidade Nova de Lisboa**
  **1099-085 Lisbon (PT)**

(72) Inventors:
• **PINTO SEQUEIRA DOS SANTOS GRAÇA, Jorge Filipe**
  **SENHORA DA HORA, PORTO (PT)**
• **NUNES FERREIRA, João Miguel**
  **SENHORA DA HORA, PORTO (PT)**
• **COUTINHO DE SOUSA, Joana**
  **SENHORA DA HORA, PORTO (PT)**

• **PALMA DA SILVA, Carlos André**
  **SENHORA DA HORA, PORTO (PT)**
• **NUNES PEREIRA, Luis Miguel**
  **CHARNECA DA CAPARICA (PT)**
• **FORTUNA NEVES FERNANDES DA CUNHA, Inês Isabel**
  **Lisboa (PT)**
• **FERRÃO DE PAIVA MARTINS, Rodrigo**
  **CHARNECA DA CAPARICA (PT)**
• **MACEDO DE CARVALHO, José Tiago**
  **MOREIRA DO CASTELO (PT)**
• **CAEIRO DE AGUIAR E COELHO DO CARMO, Bárbara**
  **CARNAXIDE (PT)**

(74) Representative: **do Nascimento Gomes, Rui**
  **J. Pereira da Cruz, S.A.**
  **Rua Vítor Cordon, 10-A**
  **1249-103 Lisboa (PT)**

(56) References cited:
**EP-A1- 3 708 360     CN-A- 103 627 049**
**JP-B1- 5 599 527**

**Description**

FIELD OF THE INVENTION

The present disclosure relates generally to hydrogel electrolytes.

BACKGROUND OF THE INVENTION

The increasing demand for energy storage devices (ESDs) is fueled by the necessity to meet the intricate energy requirements of contemporary society, with the energy from ESD emerging as a promising solution to power sensors in the Internet of Things (IoT) and addressing the growing needs for energy storage. Electrochemical energy storage (EES) technologies, including supercapacitors (SCs) and lithium-ion batteries (LIBs), have consequently garnered significant interest in response to these evolving energy challenges.

SCs take the spotlight in EES systems, offering notable advantages such as high efficiency, an extended life cycle, and the use of sustainable materials, resulting in minimal maintenance costs. SCs are ESDs based on electrochemical processes, consisting of two electrodes separated by an ion-conducting electrolyte. The electrodes are usually made of porous materials (such as activated carbon, graphene, or metal oxide), which provide a high surface area for adsorption of ions from the electrolyte.

Patent CN112908713A discloses a capacitor having a self-charging characteristic, characterized in that comprises a positive electrode, a negative electrode and a gel electrolyte; the gel electrolyte comprises zinc salt solution, calcium salt and cellulose; the zinc salt solution is an aqueous solution of a zinc salt capable of forming a hydrogel.

Patent CN101880410B discloses a high-strength transparent cellulose material. Cellulose is dissolved in a low-temperature pre-cooled NaOH-urea aqueous solution or LiOH-urea aqueous solution to prepare a cellulose solution, and cellulose hydrogels of different thicknesses are prepared from the cellulose solution. The water in the cellulose hydrogel is replaced with an organic solvent to obtain a cellulose organo-gel. Cellulose hydrogel or organic gel is subjected to supercritical drying, normal pressure drying or freeze drying to remove the liquid medium to obtain cellulose aerogel.

SUMMARY OF THE INVENTION

In one aspect of the disclosure, there is provided a hydrogel composition comprising cellulose or a derivative thereof, preferably microcrystalline cellulose, and cork particles, preferably having a particle size from 500 to 800 μm, wherein a ratio between the cellulose and the cork particles is from 1:1 to 5:1, respectively, and optionally at least one alkali metal ion, selected from Na or Li, preferably Li, and urea or derivative thereof.

In some embodiments, the hydrogel composition has an ionic conductivity of at least 2 mS cm$^{-1}$, preferably from 2 mS cm$^{-1}$ to 5 mS cm$^{-1}$, more preferably from 2 mS cm$^{-1}$ to 4 mS cm$^{-1}$.

In another aspect of the disclosure, there is provided a device comprising the hydrogel composition according to the present disclosure, at least one substrate, and at least a pair of electrodes, wherein the hydrogel is deposited on at least a portion of a first surface of the substrate, and the pair of electrodes is on a second surface of the substrate, the first surface and the second surface being on opposite sides of the substrate.

In some embodiments, the electrodes are in the form a coating on the second surface of the substrate, the coating comprising from 3 to 5 deposited layers of the electrode, the deposited layers being preferably printed layers.

In some embodiments, the substrate comprises a flexible substrate, carbon paper, carbon cloth, carbon-based hydrogel, polyethylene terephthalate (PET), Kapton, cellulose paper, textile, or any combination thereof, preferably cellulose paper.

In some embodiments, the pair of electrodes comprises a porous material selected from carbon, graphene, a metal oxide, or any combination thereof, preferably carbon.

In some embodiments, the device is for energy storage, preferably the device is a supercapacitor, more preferably a thermally chargeable supercapacitor.

In another aspect of the disclosure, there is provided an article comprising the hydrogel composition according to the present disclosure, or the device according to the present disclosure, wherein the article is an electronic device, a wearable electronic device, a flexible electronic device, a house appliance, a lens, a package, a cable, a charger, a wall, a window, or any combination thereof.

In another aspect of the disclosure, there is provided a method for obtaining a hydrogel composition according to the present disclosure, the method comprising: i) dissolving from 0.75% to 7% (w/w) of cellulose or a derivative thereof in an aqueous solution; ii) adding from 0.75% to 7% (w/w) of cork particles, preferably having a particle size from 500 to 800 μm, to the solution; iii) contacting the solution with a regeneration mixture, preferably comprising glacial acetic acid and glycerol or ethylene glycol, at a weight per weight ratio of 1:1, during a period of time from 40 minutes to 90 minutes, thereby forming the hydrogel, and optionally, iv) drying the solution, preferably at a temperature from 20°C to 40°C.

In some embodiments, the solution comprises from 70% to 85% (w/w) of deionized water, from 10% to 20% (w/w) of urea or a derivative thereof, and from 2% to 8% (w/w) of an alkali hydroxide.

In some embodiments, dissolving is performed at a temperature from -30°C to -5°C, preferably for a period of time from 5 minutes to 60 minutes, more preferably from 10 minutes to 45 minutes.

In some embodiments, the method further comprises a step of adding the solution to at least a portion of a first surface of a substrate, wherein the step precedes the step iii) of contacting the solution with the regeneration mixture.

In some embodiments, the method further comprises a step of applying at least a pair of electrodes to at least a portion of a second surface of the substrate, the first surface and the second surface being on opposite sides of the substrate, wherein applying comprises blade coating, spraying, spreading, casting, rolling, adhering, curing, printing, or any combination thereof, preferably printing.

In another aspect of the disclosure, there is provided a use of the hydrogel according to the present disclosure, as an electrolyte, preferably an electrolyte in supercapacitors, a controlled drug release material, a tissue engineering material, a sensor, a packaging material, and a 3D printing material.

In another aspect of the disclosure, there is provided a use of the device according to the present disclosure, in an electronic device, a house appliance, a cable, a charger, a wearable electronic device, and a flexible electronic device.

Unless otherwise defined, all technical and/or scientific terms used herein have the same meaning as commonly understood by one of ordinary skill in the art to which the disclosure pertains. Although methods and materials similar or equivalent to those described herein can be used in the practice or testing of embodiments of the disclosure, exemplary methods and/or materials are described below. In case of conflict, the patent specification, including definitions, will control. In addition, the materials, methods, and examples are illustrative only and are not intended to be necessarily limiting.

Further embodiments and the full scope of applicability of the present disclosure will become apparent from the detailed description given hereinafter. However, it should be understood that the detailed description and specific examples, while indicating preferred embodiments of the disclosure, are given by way of illustration only, since various changes and modifications within the spirit and scope of the invention will become apparent to those skilled in the art from this detailed description.

BRIEF DESCRIPTION OF THE DRAWINGS

Some embodiments of the disclosure are herein described, by way of example only, with reference to the accompanying drawings. With specific reference now to the drawings in detail, it is stressed that the particulars shown are by way of example and for purposes of illustrative discussion of embodiments of the disclosure. In this regard, the description taken with the drawings makes apparent to those skilled in the art how embodiments of the disclosure may be practiced.

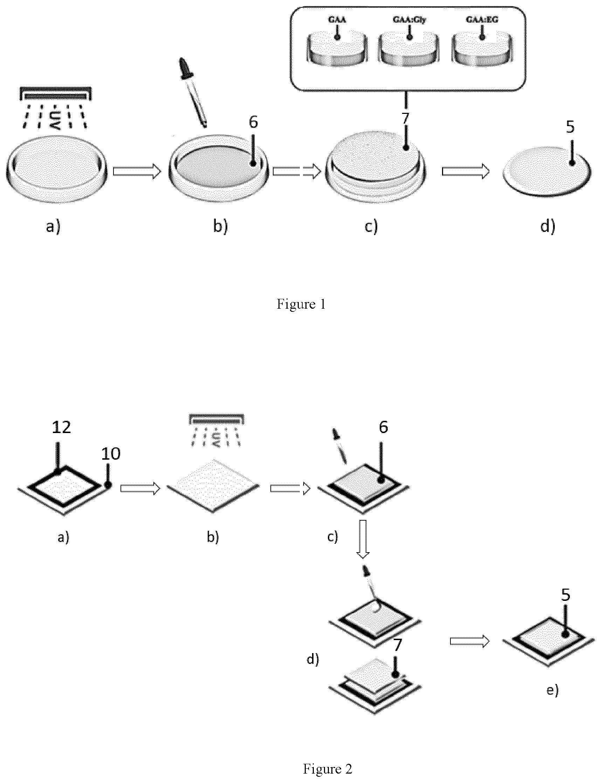

Figure 1 is a schematic representation of an electrolyte fabrication process with the following steps: a) UV-treatment of the petri dish; b) solvent-casting of the dissolved cellulose solution (6) (3 mL); c) regeneration process; and d) drying of the hydrogel composition (5) (electrolyte) at ambient conditions;

Figure 2 is a schematic representation of an electrolyte impregnation on a substrate (10) (paper); a) wax-printing and heating; b) UV-treatment of substrate (10); c) drop-casting 100 $\mu$L of dissolved cellulose solution (6); d) regeneration process by soaking or drop casting; and e) drying the hydrogel composition (5) at ambient conditions.

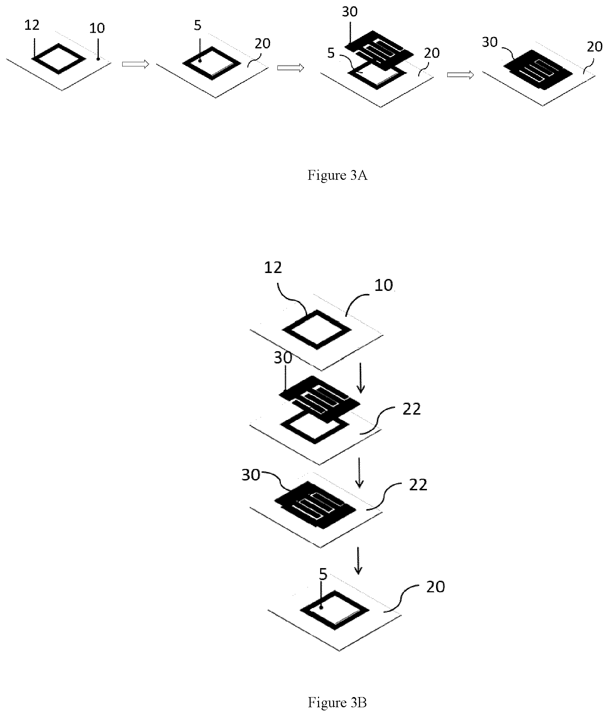

Figures 3A-B are a schematic representation of a device (supercapacitor) production process; Figure 3A represents a first configuration adopted, with a substrate (10) /hydrogel composition (5) / pair of electrodes (30) structure, in a first surface (20); and Figure 3B represents a second configuration, with a pair of electrodes (30)/ substrate (10)/ hydrogel composition (5) structure, in which the pair of electrodes (30) is on a second surface (22) and the hydrogel composition (5) is on a first surface (20);

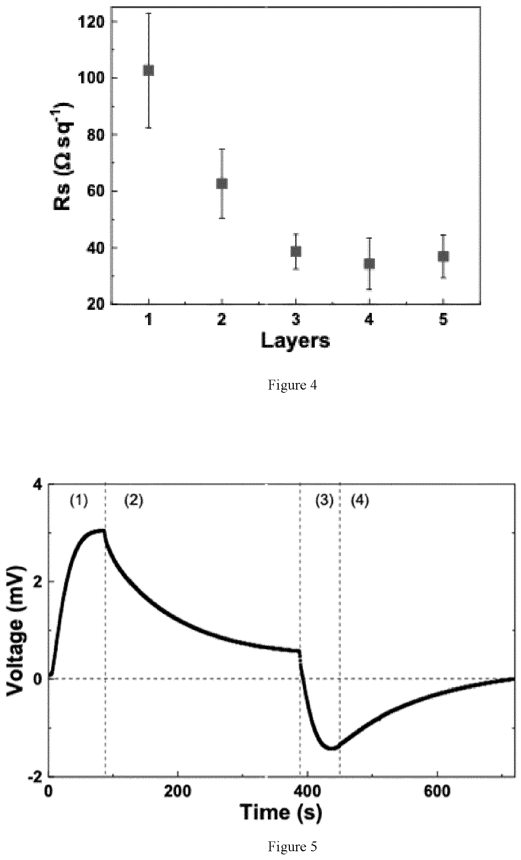

Figure 4 is a graph of average sheet resistance (Rs) plots of different electrodes; and

Figure 5 is a graph presenting voltage curve of a device according to the present disclosure, as a function of time when a temperature gradient $\Delta T = 20$ K is applied.

DETAILED DESCRIPTION OF THE INVENTION

According to some embodiments, the present disclosure provides a hydrogel composition. In some embodiments, the hydrogel comprises a cellulose matrix and cork particles within the matrix. In some embodiments, the cork particles have a particle size from 500 to 800 $\mu$m. In some embodiments, a ratio between the cellulose and the cork particles is from 1:1 to 5:1. In some embodiments, the hydrogel composition is an electrolyte. In some embodiments, the hydrogel composition is a hydrogel film. In some embodiments, the hydrogel composition is a hydrogel composite.

As used herein, the term "hydrogel film" refers to a flexible composite in the form of a film or layer.

The terms, film/films and layer/layers are used herein interchangeably. In some embodiments, the terms "layer", "film" are used herein interchangeably, to refer to a substantially uniform-thickness of a hydrogel as disclosed herein.

The present disclosure is based, in part, on the finding that the amount of cork particles present influences ionic conductivity of the hydrogel, morphology of the hydrogel, thermal conductivity of the hydrogel, or any combination thereof.

The present disclosure is based, in part, on the finding that incorporation of cork particles in the hydrogel, leads to an increase in the hydrogel ionic conductivity compared to an equivalent hydrogel devoid of cork particles.

In some embodiments, the hydrogel composition has an ionic conductivity of at least 2 mS cm$^{-1}$, preferably from 2 mS cm$^{-1}$ to 5 mS cm$^{-1}$, more preferably from 2 mS cm$^{-1}$ to 4 mS cm$^{-1}$.

In some embodiments, the ionic conductivity of a hydrogel increases from about 1 mS cm$^{-1}$, when the hydrogel is devoid of cork particles, to more than 2 mS cm$^{-1}$ when an equivalent hydrogel comprises cork particles. In some embodiments, the ionic conductivity of a hydrogel increases from about 1 mS cm$^{-1}$, when the hydrogel is devoid of cork particles, to more than 3 mS cm$^{-1}$ when an equivalent hydrogel comprises cork particles. In some embodiments, a hydrogel disclosed herein comprising cork particles has an ionic conductivity of about 3.37 mS cm$^{-1}$.

In some embodiments, the hydrogel comprises cellulose or a derivative thereof, and cork particles. In some embodiments, the hydrogel comprises cellulose or a derivative thereof, at least one alkali metal ion, urea or derivative thereof, and cork particles. In some embodiments, the alkali metal ion is selected from Na or Li. In some embodiments, the hydrogel comprises microcrystalline cellulose and cork particles.

As used herein, "cellulose or a derivative thereof" refers to cellulose or compounds derived from cellulose. In some embodiments, these derivatives (compounds derived from cellulose) are well known in the art and are created through a chemical modification of cellulose. Non-limiting examples of such derivatives include: microcrystalline cellulose (MCC), carboxymethyl cellulose (CMC), hydroxypropyl methylcellulose (HPMC), ethyl cellulose and methyl cellulose.

According to some embodiments, the present disclosure provides a device comprising a hydrogel composition as described herein, at least one substrate, and at least a pair of electrodes.

In some embodiments, the hydrogel composition is deposited on at least a portion of a first surface of a substrate (e.g. paper). In some embodiments, the electrolyte comprises a hydrogel composition deposited on at least a portion of a first surface of a substrate.

As used herein, the term "hydrogel" refers to a polymer network (matrix) structure capable of attracting, absorbing and retaining water. As used herein, the term "electrolyte" refers to a material that conduct ions, allowing a flow of electrical current within a system. In a hydrogel electrolyte as described herein, a polymer (cellulose or a derivative thereof) acts as a matrix and ions move in the water.

The present disclosure is based, in part, on the finding that an amount of water in the hydrogel composition varies with variations on a relative humidity in the environment.

In some embodiments, the hydrogel comprises at least 20% (w/w), at least 30% (w/w), at least 40% (w/w), at least 50% (w/w), at least 60% (w/w), or at least 70% (w/w) of water. Each possibility represents a separate embodiment according to the present disclosure.

In some embodiments, the hydrogel comprises from 20% (w/w) to 85% (w/w), from 40% (w/w) to 85% (w/w), from 50% (w/w) to 85% (w/w), from 60% (w/w) to 85% (w/w), from 20% (w/w) to 80% (w/w), from 40% (w/w) to 80% (w/w), or from 20% (w/w) to 50% (w/w) of water, including any range therebetween. Each possibility represents a separate embodiment according to the present disclosure.

The present disclosure is based, in part, on the finding that a hydrogel electrolyte according to the present disclosure have increased conductivity with increased relative humidity. Hydrogel according to the present disclosure have an increased performance in environments with higher relative humidity (RH). Reference is made to Example 3 of the present disclosure, where can be seen that a hydrogel according to the present disclosure presents a stable impedance at a RH of about 80 %, for 12 hours, and when the RH is decreased to about 40% the impedance increases.

In some embodiments, a hydrogel as described herein, is obtained from an aqueous solution comprising dissolved cellulose or a derivative thereof. In some embodiments, a hydrogel as described herein, is obtained from regenerating an aqueous solution comprising dissolved cellulose or a derivative thereof. In some embodiments, the solution further comprises cork particles. In some embodiments, the particles have a particle size from 500 to 800 $\mu$m. In some embodiments, a hydrogel as described herein, is obtained from a solution comprising from 0.75% to 7% (w/w) of dissolved cellulose or a derivative thereof, from 70% to 85% (w/w) of deionized water, from 10% to 20% (w/w) of urea or a derivative thereof, and from 2% to 8% (w/w) of an alkali hydroxide. In some embodiments, a hydrogel as described herein, is obtained from regenerating a solution comprising from 0.75% to 7% (w/w) of dissolved cellulose or a derivative thereof, from 70% to 85% (w/w) of deionized water, from 10% to 20% (w/w) of urea or a derivative thereof, and from 2% to 8% (w/w) of an alkali hydroxide. The solution further comprises from 0.75% to 7% (w/w) of cork particles having a particle size from 500 to 800 $\mu$m.

In some embodiments, a hydrogel as described herein, is a regenerated hydrogel.

According to the present disclosure, "regenerating" refers to a regeneration process using a regenerating agent, leading to the cellulose chains to reorganize and form a three-dimensional network (matrix). The term "regenerated hydrogel" refers to a hydrogel that was submitted to a regeneration process as described herein. In some embodiments, a hydrogel as described herein, is obtained after drying to remove excess of regenerating agent. In some embodiments, the regenerating agent comprises glacial acetic acid and ethylene glycol. In some embodiments, a hydrogel composition as disclosed herein comprises a trace amount of glacial acetic acid and glycerol or ethylene glycol.

According to some embodiments, the present disclosure provides a device comprising the hydrogel composition as described hereinabove. In some embodiments, the device comprises a hydrogel composition as described herein, at least one substrate, and at least a pair of electrodes. In some embodiments, the hydrogel is deposited on at least a portion of a first surface of the substrate, and the pair of electrodes is on a second surface of the substrate. In some embodiments, the first surface and the second surface are on opposite sides of the substrate. According to the present disclosure, a device as described herein is in the form of stacked layers, being the layers hydrogel composition/substrate/pair of electrodes. In some embodiments, in a device as described herein, the substrate is positioned between the hydrogel composition and the pair of electrodes.

In some embodiments, a hydrogel as disclosed herein, is in the form of a coating layer on at least a portion of a surface of the substrate. As used herein, the term "coating" and any grammatical derivative thereof, refers to at least one layer disposed in or over a substrate, excluding the substrate, while the term "substrate" refers to a part of the structure supporting the disposed layer/coating.

Reference is made to Figure 3B which is a schematic representation of an exemplary device according to the present disclosure. In some embodiments, the device comprises a substrate (10). In some embodiments, the substrate comprises a wax barrier (12), configured to enclose a hydrogel (electrolyte). In some embodiments, the substrate (10) comprises a first surface (20) and a second surface (22), the first surface (20) and the second surface (22) being on opposite sides of the substate, as shown. In some embodiments, a pair of electrodes (30) is placed (e.g. screen-printed) on a second surface (22) and an electrolyte (5) is placed on a first surface (20) within the wax barrier (12).

In some embodiments, the hydrogel (5) is deposited on at least a portion of a first surface (20) of the substrate (10), inside the wax barrier (12) and the pair of electrodes (30) is on a second surface (22) of the substrate (10). In some embodiments, the substrate (10) is a layer between the pair of electrodes (30) and the hydrogel (5).

In some embodiments, the electrodes are in the form a coating on the second surface of the substrate, the coating comprising from 3 to 5 deposited layers of the electrode. In some embodiments, the deposited layers are printed layers.

Non-limiting examples of suitable substrates according to the present disclosure include flexible substrate, carbon paper, carbon cloth, carbon-based hydrogel, polyethylene terephthalate (PET), Kapton, cellulose paper, textile, or any combination thereof. In some embodiments, the substrate comprises cellulose paper. In some embodiments, the substrate consists of cellulose paper.

In some embodiments, the pair of electrodes comprises a porous material selected from carbon, graphene, a metal oxide, or any combination thereof. In some embodiments, the pair of electrodes comprises carbon. In some embodiments, the pair of electrodes comprises a carbon-based ink. In some embodiments, the pair of electrodes are screen-printed carbon electrodes.

In some embodiments, the device is for energy storage. In some embodiments, the device is a supercapacitor. In some embodiments, the device is a thermally chargeable supercapacitor.

The present disclosure is based, in part, on the finding that a device as described herein combines energy harvesting and storage technology in a single system. In some embodiments, a device as described herein is configured to convert wasted thermal energy from an electric device (e.g. a set-top boxes STBs) into electric energy.

The present disclosure is based, in part, on the finding that a device as described herein reaches a thermovoltage peak of 2.47 mV for a 20 °C temperature differential, demonstrating the potential of repurposing a waste heat generated by e.g. STBs, as an external power source for other electronics.

The present disclosure is based, in part, on the finding that a hydrogel composition and device as described herein comprises sustainable materials of natural origin, such as cellulose, paper and cork, and are obtained by scalable coating/printing techniques, allowing for large-scale production at low-cost, while ensuring recyclability.

According to some embodiments, the present disclosure provides an article comprising a hydrogel composition as described herein. According to some embodiments, the present disclosure provides an article comprising a device as described herein. In some embodiments, the article is an electronic device, a wearable electronic device, a flexible electronic device, a house appliance, a lens, a package, a cable, a charger, a wall, a window, or any combination thereof.

According to some embodiments, the present disclosure provides a method for obtaining a hydrogel composition as described herein. In some embodiments, the method comprises: i) dissolving from 0.75% to 7% (w/w) of cellulose or a derivative thereof in an aqueous solution. In some embodiments, the solution comprises deionized water, urea or a derivative thereof, and an alkali hydroxide. In some embodiments, the solution comprises from 70% to 85% (w/w) of deionized water, from 10% to 20% (w/w) of urea or a derivative thereof, and from 2% to 8% (w/w) of an alkali hydroxide.

In some embodiments, dissolving is performed at a temperature from -30°C to - 5°C. In some embodiments, dissolving is performed for a period of time from 5 minutes to 60 minutes. In some embodiments, dissolving is performed for a period of time from 10 minutes to 45 minutes.

In some embodiments, the step of dissolving is repeated at least 2 times. In some embodiments, the step of dissolving is repeated from 2 times to 6 times.

In some embodiments, the method comprises ii) adding from 0.75% to 7% (w/w) of cork particles to the solution. In some embodiments, the particles have a particle size from 500 to 800 $\mu$m.

In some embodiments, the method further comprises a step iii) of contacting the solution with a regeneration mixture, during a period of time from 40 minutes to 90 minutes, thereby obtaining the hydrogel. In some embodiments, the regeneration mixture comprises glacial acetic acid and glycerol or ethylene glycol, at a weight per weight ratio of 1:1. In some embodiments, the regeneration mixture comprises glacial acetic acid and glycerol, at a weight per weight ratio of 1:1. In some embodiments, the regeneration mixture comprises glacial acetic acid and ethylene glycol, at a weight per weight ratio of 1:1.

In some embodiments, the step iii) of contacting the solution with a regeneration mixture comprises adding the regeneration mixture to a filter paper and placing the filter paper above the solution. In some embodiments, adding the regeneration mixture to a filter paper is soaking the filter paper with regeneration mixture.

The present disclosure is based in part, on the finding that using a regeneration mixture of glacial acetic acid and ethylene glycol (GAA:EG mixture), as regenerating agent, was effective in achieving a higher ionic conductivity of the hydrogel.

In some embodiments, the method further comprises a step iv) drying the hydrogel. In some embodiments, drying is at a temperature from 20°C to 40°C.

As used herein, the term "drying" refers to removing excess of regenerating mixture (regenerating agent).

In some embodiments, the method further comprises a step of adding the solution to at least a portion of a first surface of a substrate, wherein this step precedes the step iii) of contacting the solution with the regeneration mixture.

In some embodiments, the method further comprises a step of applying at least a pair of electrodes to at least a portion of a second surface of the substrate, the first surface and the second surface being on opposite sides of the substrate. In some embodiments, applying comprises blade coating, spraying, spreading, casting, rolling, adhering, curing, printing, or any combination thereof. In some embodiments, applying comprises printing.

Reference is made to Figure 1 which is a schematic representation of a process for obtaining a hydrogel composition (5), and Figure 2 which is a schematic representation of an electrolyte hydrogel composition (5) impregnation on a substrate (10) (e.g. paper).

In some embodiments, preparation of a hydrogel (electrolyte) comprises the following steps: a) UV-treatment of a petri dish; b) solvent-casting of a dissolved cellulose solution (6) comprising cork particles; c) regeneration process, comprising contacting the solution (6) with a regeneration mixture comprising glacial acetic acid and glycerol or ethylene glycol, at a weight per weight ratio of 1:1; and d) drying at ambient conditions, obtaining the hydrogel composition (5).

As shown in Figure 2, a hydrogel is impregnated on a substrate (10) (e.g. paper) comprising a wax barrier (12), by drop-casting dissolved cellulose solution (6) (c). Step d) represents regeneration step by soaking or drop casting; and e) drying the hydrogel composition (5) at ambient conditions.

According to some embodiments, the present disclosure provides a use of a hydrogel as described herein, as an electrolyte, a controlled drug release material, a tissue engineering material, a sensor, a packaging material, and a 3D printing material. In some embodiments, the present disclosure provides a use of a hydrogel as described herein, as an electrolyte in supercapacitors.

According to some embodiments, the present disclosure provides a use of a device as described herein, in an electronic device, a house appliance, a cable, a charger, a wearable electronic device, and a flexible electronic device.

According to some embodiments, the present disclosure provides a use of a device as described herein for energy storage, for conversion of thermal energy to electric energy, or both.

As used herein the term "about" refers to $\pm$ 10 %.

The terms "comprises", "comprising", "includes", "including", "having" and their conjugates mean "including but not limited to".

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment of the disclosure may include a plurality of "optional" features unless such features conflict.

As used herein, the singular form "a", "an" and "the" include plural references unless the context clearly dictates otherwise. For example, the term "a compound" or "at least one compound" may include a plurality of compounds, including mixtures thereof.

Throughout this application, various embodiments of this disclosure may be presented in a range format. It should be understood that the description in range format is merely for convenience and brevity and should not be construed as an inflexible limitation on the scope of the disclosure. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

It is appreciated that certain features of the disclosure, which are, for clarity, described in the context of separate embodiments, may also be provided in combination in a single embodiment. Conversely, various features of the disclosure, which are, for brevity, described in the context of a single embodiment, may also be provided separately or in any suitable subcombination or as suitable in any other described embodiment of the disclosure.

Various embodiments and aspects of the present disclosure as delineated hereinabove and as claimed in the claims section below find experimental support in the following examples.

EXAMPLES

Reference is now made to the following examples, which together with the above descriptions illustrate some embodiments of the disclosure in a non-limiting fashion.

***Materials and Methods***

*Cellulose-based electrolytes*

Different strategies were employed to prepare cellulose-based electrolytes (CE). Cellulose dissolution medium was formulated by combining 4.6 wt.% LiOH (0.46 g, Sigma-Aldrich ≥98 %), 15 wt%. urea (1.5 g, Carl Roth, ≥99.5 %) with 80.4 wt%. deionized water (8.04 g, Millipore). After obtaining a homogeneous and transparent solution, the solvent mixture was cooled in a freezer at -25 °C until solidified. The solution was left to thaw at room temperature, and 5 wt.% of microcrystalline cellulose (MCC, 0.5 g in 10 g of solution, Sigma-Aldrich, powder: 20 $\mu$m) was slowly added to the solvent system (9.5 g) while stirring vigorously at -8 °C until it dissolved completely ($\approx$30 min). To improve cellulose dissolution, a freezing-thawing cycle was carried out. As schematized in Figure 1, 3 mL of the cellulose solution was poured in polystyrene Petri dishes with 55 mm diameter, previously exposed to an ultraviolet (UV) treatment (Novascan PSD-UV with Ozone Elimination System) for 15 min to reduce its hydrophobic effect and improve the spreading of the solution over the entire area. The regeneration process was performed using glacial acetic acid (GAA, Sigma-Aldrich, ≥99) or mixtures of GAA with glycerol (GC, BioXtra, ≥99) or ethylene glycol (EG, Carlo Erba Reagents) with a weight ratio of 1:1. The regeneration process was performed using a Whatman paper (FILTERLAB), with the same diameter of the petri dishes, soaked in the regeneration solution. The soaked filter paper was then placed on top of the cellulose solution. Table 1 describes all the CEs developed.

Table 1 - List of CE samples prepared.

| Nomenclature | Regeneration solution | Regeneration solution [RS, wt.%] |
|---|---|---|
| CM0 | GAA | 100 |
| GCM | GAA:GC | 50:50 |
| ECM | GAA:EG | 50:50 |

*Preparation of cellulose: cork electrolytes*

Cork particles were obtained from natural cork stoppers of various wine brands were used to obtain cork particles with different granulometries, ranging from <200 $\mu$m and 500-800 $\mu$m. The cork stoppers were grounded using a domestic grinding machine and sieved to obtain the particles of different sizes. Cellulose:cork based electrolytes (CCE) were prepared by adding cork particles to cellulose-based solutions using two strategies, following the same procedure described in the previous section.

**Method 1:** Cork particles were added to the MCC-dissolved solution at various weight ratios (1:99 and 5:95 wt.%) and partially dissolved for different time periods (5-60 minutes).

**Method 2**: Different amounts of cork particles (0.05 and 0.1 g) were randomly poured in the UV-pre-treated petri-dish, and the 3 mL of the MCC-dissolved solution was poured over the cork particles/ container.

Both methods were followed by the regeneration process using GAA:EG mixture. A summary of all the developed electrolyte membranes is displayed in Table 2 and Table 3

Table 2 - List of CCE samples prepared using method 1.

| Nomenclature | Cork [C, wt.%] in the MCC-dissolved solution | Cork particles size [$\mu$m] | MCC [M, wt.%] in the LiOH:urea aqueous solvent system | Dissolution time [T, min] |
|---|---|---|---|---|
| M1C2T5 | 1 | < 200 | 5 | 5 |
| M1C2T15 | | | | 15 |
| M1C2T30 | | | | 30 |
| M1C2T60 | | | | 60 |
| M5C2T5 | 5 | | | 5 |
| M5C2T15 | | | | 15 |
| M5C2T30 | | | | 30 |
| M5C2T60 | | | | 60 |
| M1C5T5 | 1 | 500-800 | 5 | 5 |
| M1C5T15 | | | | 15 |
| M1C5T30 | | | | 30 |
| M1C5T60 | | | | 60 |
| M5C5T5 | 5 | | | 5 |
| M5C5T15 | | | | 15 |
| M5C5T30 | | | | 30 |
| M5C5T60 | | | | 60 |

Table 3 - List of CCE samples prepared using method 2.

| Nomenclature | MCC [M, wt.%] in the LiOH:urea aqueous solvent system | Cork particles size [$\mu$m] | Cork weight [C, g] for 3 mL of MCC-dissolved solution |
|---|---|---|---|
| C2M100 | 5 | < 200 | 0.1 |
| C2M50 | | | 0.05 |
| C5M100 | | 500-800 | 0.1 |
| C5M50 | | | 0.05 |

*Fabrication of the supercapacitor on paper*

*Impregnation of the electrolyte on paper*

As shown in Figure 2, a square-shape wax barrier (1 cm wide) was established to enclose the electrolyte within a 1 cm$^2$ on a 120 g/m$^2$ office paper substrate (The Navigator CompanyTM). The wax was inkjet-printed using a Xerox ColorQube printer, and then impregnated into the paper by heating at 120 °C for 5 minutes. Subsequently, a 30-minute UV-treatment was carried out to promote better spreading of the electrolyte solution, and 100 $\mu$L of MCC-dissolved solution was deposited by drop-casting into the well. Before starting the regeneration process, the solution was left to settle on the paper surface for 30 minutes to ensure better paper/electrolyte interface. The regeneration process was conducted for 1 hour, following two strategies: i) drop casting 20 $\mu$L of the regeneration solvent (GAA:EG mixture) directly on the electrolyte, or ii) coating the MCC-dissolved solution with a soaked filter paper with the regeneration solvent.

*Screen-printing of the electrodes on paper*

A 30-minute UV treatment was performed on the paper sheet with the electrolyte impregnated to promote better coating of the following active layers of the SC. Interdigital planar electrodes (with dimensions of 4.62 x 1.27 $\mu$m) were screen-printed using a water-based carbon conductive ink (WBC01S, Nanopaint) and a polyester screen with the following characteristics: model 77-55, 190 meshes per inch, 81 $\mu$m mesh opening, 55 $\mu$m wire diameter, 30% open area and a screen thickness in the range 88-97 $\mu$m. The interdigital electrodes were printed directly on top of the electrolyte and then annealed for 1 hour at 50 °C [configuration 1: paper/electrolyte/electrode (Figure 3A)].

A different approach was used to fabricate the SCs, starting with the screen-printing on the opposite side of the paper with inkjet-printed wax barriers (without electrolyte), followed by annealing for 5 minutes at 100°C. The electrolyte was impregnated within the wax barriers, as shows in the Figure 3B (configuration 2: electrode/paper/electrolyte). The sheet resistances were measured using the Biorad/Nanometrics Hall Effect system (HL5500PC).

Table 4 - Summary of the developed/optimized SCs models.

| Nomenclature | Configuration | Electrolyte |
|---|---|---|
| TE | 1: paper/electrolyte/electrode | ECM |
| BE | 2: electrode/paper/electrolyte | |
| BEC | | M1C5T30 |

*Electrochemical analysis of the supercapacitors*

The electrochemical performance of the SCs was assessed through a series of electrochemical tests, namely, EIS, cyclic voltammetry (CV), and galvanostatic charge/discharge (GCD) experiments - conducted under temperature-controlled humidity conditions (23 $\pm$ 2°C, ~80% RH). These tests were carried out in a two-electrode configuration utilizing a Gamry Instruments Reference 600 potentiostat. EIS measurements were performed using an AC voltage amplitude of 10 mV covering a frequency spectrum from 0.01 to 106 Hz. CV measurements were performed by sweeping the voltage between 0 and 0.8 V, using different sweep rates (5, 10, 20, 50, 70, 100. 200, and 500 mV s-1). Five consecutive cycles were acquired before subsequent analysis. CV analysis was performed to determine the specific storage capacitance of the device. The specific capacitance is determined by the following expression:

$$C_s = \frac{1}{2 \times X_t \times v \times \Delta V} \int_{-V}^{+V} i(v) dV \tag{2}$$

where $X_t$ is the active surface area of the device; v is the potential scan rate, $\Delta V$ is the potential window, and *i* is the current intensity.

The GCD characterization of the device is conducted to determine the operating voltage of the supercapacitors. In this analysis, the characteristic capacitive behavior of the device was evaluated by performing consecutive charge and discharge tests at different current densities (5, 10, 20, 50, 70, 100, 150, 200, 250, and 300 $\mu$A cm-1). Capacitance retention tests of 10000 CV cycles were also carried out in a scan rate of 200 mV s-1. The energy density (E) and power density (P) values of the devices, which are considered the key parameters to define the energy storage performance, were determined by considering the operating voltage, the specific capacitance, and the dimensions of the device. For EDLCs, the E and the P are calculated from Equation 3 and 4, respectively:

$$E = \frac{1}{2 \times 3600} \times C_s \times \Delta V^2 \tag{3}$$

and

$$P = \frac{E \times 3600}{\Delta t} \tag{4}$$

where E is expressed in W h cm-2, and P is expressed in W cm-2.

Mechanical deformation tests were also conducted on the SCs using a homemade automatic set-up, and 1000 bending cycles were performed, and then were subjected to CV measurements to evaluate the degradation of the devices. To showcase the scalability of our process, the inventors connected six SCs in series following configuration 2, three-layered carbon electrodes were screen-printed on paper with planar interdigitated design. These SCs were printed onto the paper substrate, mirroring the conventional SC process, arranged side by side. Employing NanoPaint's SInk01NP silver ink, the inventors seamlessly connected the six SCs, establishing the necessary interconnections. Subsequently, the inventors meticulously impregnated the electrolyte onto a side (a first surface) of the paper. This methodology not only exemplifies the scalability and effectiveness of the process disclosed for larger-scale production but also ensures an interconnected configuration of integrated supercapacitors.

*Screen-printing of the electrodes on paper*

To evaluate the thermoelectric potential, a custom-made setup was built to selectively control the temperature of each electrode of the SC, keeping one electrode "hot" and the other "cold", thus inducing a thermal gradient, while recording overtime the thermoelectrical potential obtained. To this end, the respective electrodes of the TCSC were placed on top of two peltiers. One peltier is coupled with a Pt100 temperature sensor, connect to a breakout module (MAX31865) which transfer the readings to the arduíno program. The thermal gradient between the two peltiers was induced by a voltage supply.

EXAMPLE 1

FORMULATION OF ELECTROLYTES

*Cellulose-based electrolytes*

Cellulose-based electrolytes (CEs) were produced using a simple, fast, low-cost, and environmentally friendly method that involves dissolving microcrystalline cellulose (MCC) at low temperature in an aqueous alkaline hydroxide/urea solvent system.

A completely transparent and slightly viscous solution was obtained due to the good solubility of the cellulose in the pre-cooled aqueous LiOH/urea solution. This result is achieved through a freeze-thaw process that facilitates the rapid dissolution of cellulose in a few minutes (about 5 min), under vigorous stirring at low temperatures (below -8 °C).

The transparency of the solutions is linked to the effectiveness of the cellulose dissolution process.

The dissolution of cellulose in the presence of an alkaline ionic salt (LiOH) results in the release of lithium cations (Li+) that play the role of charge carriers in the electrolyte medium, contributing to the ionic conductivity when subjected to an electric field. However, the presence of OH- imparts a highly alkaline nature to the solution (pH = 14), rendering it unsuitable for direct application in devices without causing damage to the deposited layers. To convert the MCC-dissolved solution into a hydrogel, 3 mL of solution was poured in a petri dish, followed by a regeneration step. Filter papers with the same shape and size of the petri dish were soaked in the prepared regeneration solutions (GAA, GAA:GCs, and GAA:EG), and then positioned with a tweezer on top of the solubilized cellulose for 1 hour, slowing converting into a hydrogel.

*Cellulose:cork-based electrolytes*

Cork, with its unique composition and porous hierarchical structure, stands out for its diverse properties, such as effective thermal, electrical, and acoustic insulation, low density, impermeability to liquids and gases, resistance to fire, high temperatures, as well as exceptional friction resistance, elasticity, compressibility and remarkable chemical resistance. Therefore, cork particles were incorporated into the cellulose electrolyte in order to study their influence on the electrolyte's ionic and thermoelectric performance.

In method 1, cork particles were incorporated into the solubilized cellulose solution at different weight ratios and partially dissolved. It was observed that the solution takes on a darker brown color for longer periods of dissolution and higher amounts of cork. A similar observation occurs when using method 2, where cork particles are evenly spread on the petri dish prior casting the MCC-dissolved solution. Regarding the obtained membranes, there is no uniform distribution of cork particles in the resulting membrane, which, without being bound to any particular theory, can be attributed to the hydrophobic behavior of cork particles in the presence of aqueous solutions. This non-uniform distribution of cork particles within the electrolyte is more pronounced in the membranes with lower amount of cork particles. At a macroscopic level, the membranes prepared by method 1 exhibit significantly less brittleness compared to those obtained by method 2. This enhanced performance is attributed to the cork particles' ability to dissolve in the regeneration solution, facilitating a more stable and resilient integration into the electrolyte matrix. In this context, it is worth noting that the approach of method 1 not only yields membranes that are less fragile at a macroscopic level but also ensures greater homogeneity in the incorporation of cork particles into the electrolyte matrix.

EXAMPLE 2

DESIGN AND OPTIMIZATION OF SUPERCAPACITORS ON PAPER SUBSTRATE

Figures 3A-B show a visual description of the process for developing the SCs, using two different configurations.

Considering the configuration designs under focus, an initial study was performed to optimize the regeneration step using two distinct regeneration strategies: i) drop-casting the regeneration solvent mixture directly on the dissolved cellulose or soaking; ii) coating the dissolved cellulose solution with filter paper soaked in the regeneration solvent mixture. It was observed that the electrolytes have a more uniform surface when using soaked filter paper in the regenerative agent than those obtained by the drop casting method. Therefore, the "soaking method" was the regeneration strategy adopted in the fabrication of the SCs.

Relevant parameters are listed in Table 5. It is possible to infer that higher humidity levels lead to a lower contact resistance. Comparing the ionic conductivity values obtained for the ECM membrane (1.37 mS cm$^{-1}$) at 40% humidity, it can be observed that the ECM/paper values, although lower, remain in the same order of magnitude (0.393 mS cm$^{-1}$) at 80% humidity. The lower ionic conductivity of the ECM/paper is expected since paper has been included in the electrolyte structure and hinders the movement of ionic species. Additionally, paper reinforces the structural mechanical integrity of the ECM and opens up other design possibilities for the SCs.

**Table 5** - Resume of the electrochemical characterization of the ECM/paper electrolytes.

| The values show the average and the respective standard error of the mean obtained from three samples each. | | | | |
|---|---|---|---|---|
| Sample Name | Thickness [mm] | $C_f$=100mHz [$\mu$S$\times$cm$^{-2}$] | $R_b$ [W] | si [mS$\times$cm$^{-1}$] |
| ECM/paper (~40%) | 0.383 $\pm$ 0.010 | 0.785 $\pm$ 1.164 | 1734.67 $\pm$ 580.97 | 0.013 $\pm$ 0.004 |
| ECM/paper (~80%) | | 6.014 $\pm$ 1.732 | 59.41 $\pm$ 17.83 | 0.393 $\pm$ 0.143 |

Besides the electrolyte, electrodes are also a critical layer of the SCs. Current collectors in electrochemical devices must ideally combine high electrical conductivity, low contact resistance, electrochemical stability to prevent degradation over time, optimize charge transfer with good mechanical robustness, and establish an excellent interface with the active layers of the SCs as well as a good adhesion to prevent delamination during operation. In this work, the inventors have selected a commercial, screen-printable, water-based carbon conductive ink to pattern the electrodes of the SCs. Its water-based formulation is not only economically and environmentally appealing but also non-toxic.

The effect of number of printed layers on paper on the electrical conductivity was studied Figure 4. Ten samples were screen-printed with a square shape (active area of 1 cm$^2$) with different numbers of layers, ranging from 1 to 5, followed by annealing for 5 minutes at 100°C. Keeping sheet resistance low is crucial for optimizing the performance and efficiency of the SCs.

Figure 4 shows that the sheet resistance decreases as the number of printing layers increases and stabilizes after three layers. The uniformity of the pattern is achieved with only one printed layer, but the sheet resistance is still high. The optimum number of passes was three, resulting in a sheet resistance of 38.68 $\Omega$ sq$^{-1}$.

Considering the optimal procedure for the electrolyte and the electrodes, these strategies were implemented on the fabrication of the SCs. Numerous imperfections were noticeable when the carbon ink was screen-printed on top of the electrolyte. These imperfections result in variations between the printing passages, compromising precise control over the interdigital fingers and preventing the formation of homogeneous conduction paths. In addition, poor contact between the electrodes and the electrolyte was evident, manifested by noticeable detachment with time and use. On the other hand, when the carbon electrodes and electrolyte are positioned on opposite sides of the paper, both exhibit greater uniformity in their implementation.

Regarding the configuration designs studied, one of the crucial challenges in the manufacture of SCs is ensuring a smooth interface between all the materials involved. Considering this challenge, a strategic decision was made to avoid manufacturing the SCs directly on the membranes, given their sensitivity to humidity, which could cause deformation of the deposited layers. This precaution is motivated by the behavior of the electrolyte, which adjusts its dimensions in response to the amount of water retained, varying according to humidity conditions. On the other hand, Configuration 2 ensures an efficient interface between the various deposited layers that interact with the electrolyte.

EXAMPLE 3

CHARACTERIZATION OF FABRICATED SUPERCAPACITORS

The electrochemical characterization of the developed SCs started with impedance analysis at two different relative humidity values.

The impedance was recorded at 1 kHz for 24 hours showing the high susceptibility of the SCs to humidity variation. TE, BE and BEC SCs exhibited equivalent series resistance (ESR) in order of 500 W, and these values remained stable for 12 h at RH ~of 80 %. However, as soon as the RH changes the impedance increases, reaching values of 3, 2.5, and 1.75 kW, respectively, after 12 h at RH of 40 %. The SCs with ECM displays a more pronounced increase in impedance compared to the SC with M1C5T30, in the first hours at 40 % of RH. Without being bound to any particular theory, this can be related to the addition of cork particles which may decrease the hydrophilicity of the electrolyte system. Taking this into consideration, the electrochemical performance of the SCs was evaluated by CV, GCD, and EIS in a two-electrode cell configuration to unveil their energy storage properties.

CV and GCD analyses were performed to determine the appropriate operating voltage window (OVW) of the devices, as well as determine the specific storage capacitance ($C_s$).

CV was first assessed to determine the safe OVW by gradually increasing the voltage. 0.8 V was the selected as a stable OVW to conduct the further electrochemical analysis, without carrying the risk of further develop reactions that might hinder the devices performances. Hydrogel electrolytes have limited OVW owing to the presence of water in their constitution.

The $C_s$ of the devices was determinate from CV and GCD measurements, through Equation 1. It was possible to observe that the $C_s$ decreases upon the increase in the scan rate and current density. This variation is related to the shorter time for the formation of the EDL at higher scan rates, while at lower scan rates the electrolyte ions have more time to accommodate in the pores of the electrodes. The $C_s$ of all the electrochemical was characterized SCs using both configurations and the different electrolytes, TE, BE and BEC, at a scan rate of 10 mV s$^{-1}$, is in the order of magnitude mF cm$^{-2}$. Maximum $C_s$ values of 1.80, 1.78 and 2.63 mF cm$^{-2}$ were achieved at a scan rate of 5 mV s$^{-1}$, for TE, BE, and BEC SCs, respectively, while for a scan rate of 10 $\mu$A cm$^{-1}$ $C_s$ values correspond to 3.08, 2.58 and 3.38 mF cm$^{-2}$ for TE, BE and BEC SCs, respectively. Comparing the values obtained for the different SCs, it can be seen that BEC SC exhibit a superior $C_s$ value, owing to the superior ionic conductivity of the M1C5T30 electrolyte.

Using Equation 2 and Equation 3, a maximum energy density of 0.272, 0.227, and 0.298 $\mu$Wh cm$^{-2}$ was obtained and a maximum power density of 0.206, 0.474, and 0.329 mW cm$^{-2}$ for TE, BE, and BEC SCs, respectively.

EIS measurements were performed to understand the type of energy storage mechanism and determine the ESR. The Nyquist plot showed that the electrode behavior strongly depends on the frequency. ESRs of 439, 688 and 573 $\Omega$ are obtained for TE, BE, and BEC SCs, which are similar to the internal resistance extracted at 1 kHz.

The devices exhibited a capacitance retention of 114% and 143% respectively, confirming its excellent cyclability.

The scalability of the developed SCs was demonstrated by connecting in series six printed SCs, using the configuration 2 and ECM as the electrolyte. Briefly, three-layered carbon electrodes were screen-printed on paper with planar interdigitated design. Then silver SInk01NP ink, NanoPaint, was used to create the interconnection pathways. Subsequently, the ECM electrolyte was drop-casted and regenerated on the opposite side (opposite surface). The six TSCS connected in series were charged with 4.8 V and connected to a wristwatch. It was observed that not only is it possible to turn on the watch, but that it can stay on for around 4 minutes.

EXAMPLE 4

THERMALLY CHARGEABLE SUPERCAPACITORS

It was found that the electrolyte containing cork particles has promising characteristics for its application in TCSC. By combining the promising thermoelectric properties of the selected electrolyte (M1C5T30) with the high capacitive performance of the SCs produced with planar interdigital carbon electrodes, the inventors demonstrated the operation of the TCSCs. The ionic thermoelectric effect acts as an internal electrical generator, charging the SC's EDLC. Figure 5 illustrates the charge/discharge cycle obtained for the TCSC produced. The states presented are (1) initial state, (2) charging, (3) storage, and (4) discharging.

Immediately before the start of state 1, the electrolyte ions are randomly distributed in the electrolytic medium. When $\Delta T$ = 20 °C is applied to the TCSCs (1), the electrolyte cations migrate to the cold electrode due to the Soret effect, leading to an increase in voltage ($V_{thermo}$) until it reaches a stable value of around 3.04 mV. Then, when $R_{Load = 100 \, kw}$ is turned on, the charging state (2) begins, in which the voltage ($V_{Load}$) decreases rapidly, reaching a stable value of around 0.57 mV. It would be expected that at the end of state 2), the voltage would gradually drop to $\approx$0 V as the amount of accumulated ions reaches their maximum concentration. However, this does not happen due to the residual voltage, which is associated with electronic leakage current, resulting in a non-zero voltage drop after the TCSC has been fully charged. This curve corresponds to the device's charging curve, and the abrupt decrease in $V_{Load}$ during charging is due to the transfer of charge to the capacitor, inducing an opposite signal compensated by the thermovoltage. The effective charging voltage ($V_{effective}$) is around 2.47 mV. Once the TCSC is fully charged, heating is turned off, and $R_{Load}$ is removed (3), the circuit is reopened, allowing charges to be transferred to the TCSC electrodes. This causes the voltage ($V_{thermo}$) to drop to negative values until it stabilizes, inducing the TCSC to charge again. In state 4), the TCSC is discharged by introducing $R_{Load}$, which unbalances the ions in the electrolyte, generating an electric current in the external circuit and causing the random migration of cations into the electrolytic medium. The introduction of $R_{Load}$ simulates the external device intended to be powered with the energy converted during the discharge of the TCSC, thus transforming the accumulated energy into a useful form for the operation of an electronic device. Finally, the energy storage obtained through the thermal gradient was determined using Equation 2, considering the effective charging voltage of the device for $\Delta T = 20$ °C, resulting in an E of ~2.55 pW h cm$^{-2}$, which corresponds to a charge on the electrodes, $Q_{ch}$ of 0.12 mC cm$^{-2}$ determined through the following equation:

$$Q_{ch} = C(S_i \times \Delta T) \qquad (5)$$

The results achieved by the proposed TCSC prototype offer a promising solution for integrating energy conversion and storage into a single device. This highlights the system's potential ability to harness the residual heat from an electronic device, converting it into electrical energy and storing it for later use as an external energy source to power electronic alarm devices.

Although the disclosure has been described in conjunction with specific embodiments thereof, it is evident that many alternatives, modifications and variations will be apparent to those skilled in the art. Accordingly, it is intended to embrace all such alternatives, modifications and variations that fall within the scope of the appended claims.

## Claims

1. Hydrogel composition comprising cellulose or a derivative thereof, preferably microcrystalline cellulose, and cork particles, having a particle size of < 200 $\mu$m or from 500 to 800 $\mu$m, preferably having a particle size from 500 to 800 $\mu$m, wherein a ratio between said cellulose and said cork particles is from 1:1 to 5:1, respectively, and optionally at least one alkali metal ion, selected from Na or Li, preferably Li, and urea or derivative thereof.

2. Hydrogel composition according to claim 1, wherein said hydrogel composition has an ionic conductivity of at least 2 mS cm$^{-1}$, preferably from 2 mS cm$^{-1}$ to 5 mS cm$^{-1}$, more preferably from 2 mS cm$^{-1}$ to 4 mS cm$^{-1}$.

3. Device comprising the hydrogel composition according to any one of claims 1 to 2, at least one substrate, and at least a pair of electrodes, wherein said hydrogel is deposited on at least a portion of a first surface of said substrate, and said pair of electrodes is on a second surface of said substrate, said first surface and said second surface being on opposite sides of said substrate.

4. Device according to claim 3, wherein said electrodes are in the form a coating on said second surface of said substrate, said coating comprising from 3 to 5 deposited layers of said electrode, said deposited layers being preferably printed layers.

5. Device according to any one of claims 3 to 4, wherein said substrate comprises a flexible substrate, carbon paper, carbon cloth, carbon-based hydrogel, polyethylene terephthalate (PET), Kapton, cellulose paper, textile, or any combination thereof, preferably cellulose paper.

6. Device according to any one of claims 3 to 5, wherein said pair of electrodes comprises a porous material selected from carbon, graphene, a metal oxide, or any combination thereof, preferably carbon.

7. Device according to any one of claims 3 to 6, wherein said device is for energy storage, preferably said device is a supercapacitor, more preferably a thermally chargeable supercapacitor.

8. Article comprising the hydrogel composition according to any one of claims 1 to 2, or the device according to any one of claims 3 to 7, wherein said article is an electronic device, a wearable electronic device, a flexible electronic device, a house appliance, a lens, a package, a cable, a charger, a wall, a window, or any combination thereof.

9. Method for obtaining a hydrogel composition according to any one of claims 1 to 2, the method comprising: i) dissolving from 0.75% to 7% (w/w) of cellulose or a derivative thereof in an aqueous solution; ii) adding from 0.75% to 7% (w/w) of cork particles, preferably having a particle size from 500 to 800 $\mu$m, to the solution; iii) contacting the solution with a regeneration mixture, preferably comprising glacial acetic acid and glycerol or ethylene glycol, at a weight per weight ratio of 1:1, during a period of time from 40 minutes to 90 minutes, thereby forming the hydrogel, and optionally, iv) drying the solution, preferably at a temperature from 20°C to 40°C.

10. Method according to claim 9, wherein said solution comprises from 70% to 85% (w/w) of deionized water, from 10% to 20% (w/w) of urea or a derivative thereof, and from 2% to 8% (w/w) of an alkali hydroxide.

11. Method according to any one of claims 9 to 10, wherein dissolving is performed at a temperature from -30°C to -5°C, preferably for a period of time from 5 minutes to 60 minutes, more preferably from 10 minutes to 45 minutes.

12. Method according to any one of claims 9 to 11, wherein the method further comprises a step of adding the solution to at least a portion of a first surface of a substrate, wherein said step precedes the step iii) of contacting the solution with the regeneration mixture.

13. Method according to claim 12, further comprising a step of applying at least a pair of electrodes to at least a portion of a second surface of the substrate, said first surface and said second surface being on opposite sides of said substrate, wherein applying comprises blade coating, spraying, spreading, casting, rolling, adhering, curing, printing, or any combination thereof, preferably printing.

14. Use of the hydrogel according to any one of claims 1 to 2, as an electrolyte, preferably an electrolyte in supercapacitors, a controlled drug release material, a tissue engineering material, a sensor, a packaging material, and a 3D printing material.

15. Use of the device according to any one of claims 3 to 7, in an electronic device, a house appliance, a cable, a charger, a wearable electronic device, and a flexible electronic device.

**Patentansprüche**

1. Hydrogelzusammensetzung, umfassend Cellulose oder ein Derivat davon, vorzugsweise mikrokristalline Cellulose, und Korkteilchen, vorzugsweise mit einer Teilchengröße von 500 bis 800 $\mu$m, wobei das Verhältnis zwischen der Cellulose und den Korkteilchen jeweils 1:1 bis 5:1 beträgt, und gegebenenfalls mindestens ein Alkalimetallion, ausgewählt aus Na oder Li, vorzugsweise Li, und Harnstoff oder ein Derivat davon.

2. Hydrogelzusammensetzung nach Anspruch 1, wobei die Hydrogelzusammensetzung eine Ionenleitfähigkeit von mindestens 2 mS cm$^{-1}$, vorzugsweise von 2 mS cm$^{-1}$ bis 5 mS cm$^{-1}$, besonders bevorzugt von 2 mS cm$^{-1}$ bis 4 mS cm$^{-1}$ aufweist.

3. Vorrichtung, umfassend die Hydrogelzusammensetzung nach einem der Ansprüche 1 bis 2, mindestens ein Substrat und mindestens ein Paar Elektroden, wobei das Hydrogel auf mindestens einem Teil einer ersten Oberfläche des Substrats abgeschieden ist und das Elektrodenpaar sich auf einer zweiten Oberfläche des Substrats befindet, wobei die erste Oberfläche und die zweite Oberfläche auf gegenüberliegenden Seiten des Substrats liegen.

4. Vorrichtung nach Anspruch 3, wobei die Elektroden in Form einer Beschichtung auf der zweiten Oberfläche des Substrats vorliegen, wobei die Beschichtung 3 bis 5 abgeschiedene Schichten der Elektrode umfasst, wobei die abgeschiedenen Schichten vorzugsweise gedruckte Schichten sind.

5. Vorrichtung nach einem der Ansprüche 3 bis 4, wobei das Substrat ein flexibles Substrat, Kohlenstoffpapier, Kohlenstoffgewebe, Hydrogel auf Kohlenstoffbasis, Polyethylenterephthalat (PET), Kapton, Zellulosepapier, Textil oder eine beliebige Kombination davon, vorzugsweise Zellulosepapier, umfasst.

6. Vorrichtung nach einem der Ansprüche 3 bis 5, wobei das Elektrodenpaar ein poröses Material umfasst, das aus Kohlenstoff, Graphen, einem Metalloxid oder einer beliebigen Kombination davon, vorzugsweise Kohlenstoff, ausgewählt ist.

7. Vorrichtung nach einem der Ansprüche 3 bis 6, wobei die Vorrichtung zur Energiespeicherung dient, vorzugsweise ist die Vorrichtung ein Superkondensator, besonders bevorzugt ein thermisch aufladbarer Superkondensator.

8. Gegenstand, umfassend die Hydrogelzusammensetzung nach einem der Ansprüche 1 bis 2 oder die Vorrichtung nach einem der Ansprüche 3 bis 7, wobei der Gegenstand ein elektronisches Gerät, ein tragbares elektronisches Gerät, ein flexibles elektronisches Gerät, ein Haushaltsgerät, eine Linse, eine Verpackung, ein Kabel, ein Ladegerät, eine Wand, ein Fenster oder eine beliebige Kombination davon ist.

**9.** Verfahren zur Herstellung einer Hydrogelzusammensetzung nach einem der Ansprüche 1 bis 2, wobei das Verfahren umfasst: i) Auflösen von 0,75 % bis 7 % (w/w) Cellulose oder eines Derivats davon in einer wässrigen Lösung; ii) Zugeben von 0.75 % bis 7 % (w/w) Korkteilchen, vorzugsweise mit einer Teilchengröße von 500 bis 800 $\mu$m, zu der Lösung; iii) Inkontaktbringen der Lösung mit einer Regenerationsmischung, vorzugsweise umfassend Eisessig und Glycerin oder Ethylenglykol, in einem Gewichtsverhältnis von 1:1, während eines Zeitraums von 40 Minuten bis 90 Minuten, wodurch das Hydrogel gebildet wird, und gegebenenfalls iv) Trocknen der Lösung, vorzugsweise bei einer Temperatur von 20°C bis 40°C.

**10.** Verfahren nach Anspruch 9, wobei die Lösung 70 % bis 85 % (w/w) entionisiertes Wasser, 10 % bis 20 % (w/w) Harnstoff oder ein Derivat davon und 2 % bis 8 % (w/w) eines Alkalihydroxids enthält.

**11.** Verfahren nach einem der Ansprüche 9 bis 10, wobei das Auflösen bei einer Temperatur von -30°C bis -5°C durchgeführt wird, vorzugsweise über einen Zeitraum von 5 Minuten bis 60 Minuten, besonders bevorzugt von 10 Minuten bis 45 Minuten.

**12.** Verfahren nach einem der Ansprüche 9 bis 11, wobei das Verfahren ferner einen Schritt des Zugebens der Lösung auf mindestens einen Teil einer ersten Oberfläche eines Substrats umfasst, wobei dieser Schritt dem Schritt iii) des Inkontaktbringens der Lösung mit der Regenerationsmischung vorausgeht.

**13.** Verfahren nach Anspruch 12, das ferner einen Schritt des Aufbringens von mindestens einem Paar Elektroden auf mindestens einen Teil einer zweiten Oberfläche des Substrats umfasst, wobei sich die erste Oberfläche und die zweite Oberfläche auf gegenüberliegenden Seiten des Substrats befinden, wobei das Aufbringen Rakelbeschichtung, Sprühen, Verteilen, Gießen, Rollen, Kleben, Aushärten, Drucken oder eine beliebige Kombination davon, vorzugsweise Drucken, umfasst.

**14.** Verwendung des Hydrogels nach einem der Ansprüche 1 bis 2 als Elektrolyt, vorzugsweise als Elektrolyt in Superkondensatoren, als Material zur kontrollierten Wirkstofffreisetzung, als Material für die Gewebezüchtung, als Sensor, als Verpackungsmaterial und als Material für den 3D-Druck.

**15.** Verwendung der Vorrichtung nach einem der Ansprüche 3 bis 7 in einem elektronischen Gerät, einem Haushaltsgerät, einem Kabel, einem Ladegerät, einem tragbaren elektronischen Gerät und einem flexiblen elektronischen Gerät.

**Revendications**

**1.** Composition d'hydrogel comprenant de la cellulose ou un dérivé de celle-ci, de préférence de la cellulose microcristalline, et des particules de liège, de préférence ayant une taille de particules comprise entre 500 et 800 $\mu$m, dans laquelle le rapport entre ladite cellulose et lesdites particules de liège est compris entre 1:1 et 5:1, respectivement, et optionnellement d'au moins un ion de métal alcalin, choisi parmi Na ou Li, de préférence Li, et de l'urée ou un dérivé de celle-ci.

**2.** Composition d'hydrogel selon la revendication 1, dans laquelle ladite composition d'hydrogel a une conductivité ionique d'au moins 2 mS cm$^{-1}$, de préférence de 2 mS cm$^{-1}$ à 5 mS cm$^{-1}$, plus préférablement de 2 mS cm$^{-1}$ à 4 mS cm$^{-1}$.

**3.** Dispositif comprenant la composition d'hydrogel selon l'une quelconque des revendications 1 à 2, au moins un substrat et au moins une paire d'électrodes, dans lequel ledit hydrogel est déposé sur au moins une partie d'une première surface dudit substrat, et ladite paire d'électrodes se trouve sur une deuxième surface dudit substrat, ladite première surface et ladite deuxième surface se trouvant sur des côtés opposés dudit substrat.

**4.** Dispositif selon la revendication 3, dans lequel lesdites électrodes se présentent sous la forme d'un revêtement sur ladite deuxième surface dudit substrat, ledit revêtement comprenant de 3 à 5 couches déposées de ladite électrode, lesdites couches déposées étant de préférence des couches imprimées.

**5.** Dispositif selon l'une quelconque des revendications 3 à 4, dans lequel ledit substrat comprend un substrat flexible, du papier carbone, du tissu carbone, un hydrogel à base de carbone, du polyéthylène téréphtalate (PET), du Kapton, du papier cellulose, du textile, ou toute combinaison de ceux-ci, de préférence du papier cellulose.

**6.** Dispositif selon l'une quelconque des revendications 3 à 5, dans lequel ladite paire d'électrodes comprend un matériau poreux choisi parmi le carbone, le graphène, un oxyde métallique ou toute combinaison de ceux-ci, de préférence le carbone.

**7.** Dispositif selon l'une quelconque des revendications 3 à 6, dans lequel ledit dispositif est destiné au stockage d'énergie, de préférence ledit dispositif est un supercondensateur, plus préférablement un supercondensateur chargeable thermiquement.

**8.** Article comprenant la composition d'hydrogel selon l'une quelconque des revendications 1 à 2, ou le dispositif selon l'une quelconque des revendications 3 à 7, où ledit article est un dispositif électronique, un dispositif électronique portable, un dispositif électronique flexible, un appareil électroménager, une lentille, un emballage, un câble, un chargeur, un mur, une fenêtre, ou toute combinaison de ceux-ci.

**9.** Procédé pour obtenir une composition d'hydrogel selon l'une quelconque des revendications 1 à 2, le procédé comprenant : i) la dissolution de 0,75 % à 7 % (p/p) de cellulose ou d'un dérivé de celle-ci dans une solution aqueuse ; ii) l'ajout de 0,75 % à 7 % (p/p) de particules de liège, de préférence ayant une taille de particules de 500 à 800 $\mu$m, à la solution ; iii) la mise en contact de la solution avec un mélange de régénération, comprenant de préférence de l'acide acétique glacial et du glycérol ou de l'éthylène glycol, dans un rapport de poids de 1:1, pendant une période de temps de 40 minutes à 90 minutes, formant ainsi l'hydrogel, et optionnellement, iv) le séchage de la solution, de préférence à une température de 20 °C à 40 °C.

**10.** Procédé selon la revendication 9, dans lequel ladite solution comprend de 70 % à 85 % (p/p) d'eau déionisée, de 10 % à 20 % (p/p) d'urée ou d'un dérivé de celle-ci, et de 2 % à 8 % (p/p) d'un hydroxyde alcalin.

**11.** Procédé selon l'une quelconque des revendications 9 à 10, dans lequel la dissolution est effectuée à une température comprise entre -30 °C et -5 °C, de préférence pendant une période de temps comprise entre 5 minutes et 60 minutes, plus préférablement entre 10 minutes et 45 minutes.

**12.** Procédé selon l'une quelconque des revendications 9 à 11, où le procédé comprend en outre une étape consistant à ajouter la solution à au moins une partie d'une première surface d'un substrat, ladite étape précédant l'étape iii) consistant à mettre en contact la solution avec le mélange de régénération.

**13.** Procédé selon la revendication 12, comprenant en outre une étape consistant à appliquer au moins une paire d'électrodes sur au moins une partie d'une deuxième surface du substrat, ladite première surface et ladite deuxième surface étant situées sur des côtés opposés dudit substrat, où l'application comprend couchage à la lame, pulvérisation, étalement, moulage, roulage, adhérence, durcissement, impression ou toute combinaison de ceux-ci, de préférence l'impression.

**14.** Utilisation de l'hydrogel selon l'une quelconque des revendications 1 à 2, en tant qu'électrolyte, de préférence un électrolyte dans des supercondensateurs, un matériau pour libération contrôlée de médicament, un matériau d'ingénierie tissulaire, un capteur, un matériau d'emballage et un matériau d'impression 3D.

**15.** Utilisation du dispositif selon l'une quelconque des revendications 3 à 7, dans un dispositif électronique, un appareil électroménager, un câble, un chargeur, un dispositif électronique portable et un dispositif électronique flexible.

Figure 1

Figure 2

Figure 3A

Figure 3B

Figure 4

Figure 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 112908713 A

- CN 101880410 B